# EUROPEAN PATENT APPLICATION

(11) **EP 4 825 794 A1**
(43) Date of publication of application: **21.10.2026**
(21) Application number: 25305570.1
(22) Date of filing: 17.04.2025
(51) Int. Cl.: C01B 3/06, C01B 3/32

(54) **H2 RELEASE**

(71) Applicant: Hysilabs, SAS, 13100 Aix-en-Provence (FR)
(72) Inventor: D'AMBRA, Florian, 13100 Aix-en-Provence (FR)
(74) Representative: Plasseraud IP

(57) **Abstract**

The present invention relates to a catalyst-free hydrogen releasing method comprising: providing (100) a polysiloxane hydrogen carrier; contacting (200) a proton source with the polysiloxane hydrogen carrier thereby obtaining a polysiloxane mixture; pressurizing (300) the polysiloxane mixture at a pressure of higher than 1 bar; and heating (400) the polysiloxane mixture at a temperature of at least 100°C; thereby obtaining a gaseous

## Description

### Technical Field

The present invention relates to methods for producing hydrogen and more in particular to methods to produce hydrogen from polysiloxane hydrogen carriers.

### Background Art

The possibility of widespread adoption of hydrogen as an energy source depends on developing safe, efficient, and economical methods for its storage, transportation, and release.

There are several possibilities for producing hydrogen. Most hydrogen is currently produced from fossil fuels through steam methane reforming. In this process, hydrogen is produced from a chemical reaction between steam and methane, the main component of natural gas. This process produces hydrogen along side with carbon dioxide.

It is also possible to produce hydrogen while avoiding use of fossil fuels. Notably, hydrogen can be produced through electrolysis of water using renewable electricity. In other cases, hydrogen can be produced from other low-emission sources such as biomass through for example biomass gasification.

After production, hydrogen is mainly delivered by pipelines, tube trailers (as compressed gas) or special tankers (in its liquified form). The delivery of hydrogen in these ways has several challenges. Indeed, hydrogen can leak through the material of the pipelines, tube trailers or special tankers because of the size of the molecule of hydrogen. Further, hydrogen is a highly inflammable gas. This property and its tendency to leak generates a high risk of security hazard.

Today, alternative solutions are emerging to provide hydrogen in another form than gas: hydrogen carriers. One type of such hydrogen carriers is polysiloxane type hydrogen carriers such as those described in US 2021269305 A1, US 2022388840 A1 and WO 2022/269009 A1. Hydrogen is stored in these polysiloxane hydrogen carriers as atoms linked to silicone atoms. When it is desired to produce gaseous hydrogen from such a polysiloxane hydrogen carrier, the latter is contacted with water and a basic catalyst. Usually, the polysiloxane hydrogen carrier and water are spread onto a surface coated with the catalyst such as described in EP4074412A1. The catalyst used is sodium hydroxide. The reaction leading to the release of hydrogen is performed at room temperature or at a temperature lower than 50°C.

Using hydrogen as energy fuel is seen as a solution capable of mitigating the environmental impact of energy production. Yet, catalysts such as sodium hydroxide have significant negative impact on the environment and present risks of chemical hazard.

Therefore, there is still a need to find a safer solution to release hydrogen from polysiloxane hydrogen carriers and with a lower impact on the environment.

### Summary

This disclosure improves the situation.

Thus, the present invention provide a catalyst-free hydrogen releasing method which comprises:
providing a polysiloxane hydrogen carrier;
contacting a proton source with the polysiloxane hydrogen carrier thereby obtaining a polysiloxane mixture;
pressurizing the polysiloxane mixture at a pressure of higher than 1 bar; and heating the polysiloxane mixture at a temperature of at least 100°C;
thereby obtaining a gaseous phase, a solid phase and a liquid phase; wherein the gaseous phase comprises H₂.

The following features may be optionally implemented; separately or in combination one with the others.

The polysiloxane may comprise:

-(SiH2-O)n-

wherein n is an integer representing the number of repeating units, with n being 2 or more.

The polysiloxane may be a compound of formula (I):

R-O-(SiH2-O)n-R',

wherein R and R' are carbon-free and independently comprise at least one of Si, H, O and a halogen.

The proton source may be water.

The water may be chosen from deionized water, tap water, lake water, river water, sea water.

Contacting may comprise injecting the reagents under pressure.

Pressurizing may be performed until a pressure of 1 to 1000 bars is reached, preferably 20 to 100 bars, still preferably 30 to 60 bars.

Heating may comprise heating the proton source. In such case, heat generated by the reaction between the proton source and the hydrogen carrier may at least partially be recycled back to heat the proton source.

Heating may be performed at a temperature of 100 to 400°C, preferably 150 to 300°C, still preferably 160 to 280°C.

The method may further comprise separating the three phases.

Separating the three phases may comprise collecting the gaseous phase to separate it from the solid and liquid phases.

The method may further comprise cooling down the collected gaseous phase and purifying the cooled gaseous phase.

The method may further comprise collecting a mixture of solid and liquid phases, cooling down the mixture, filtering the solid phase from the liquid phase.

### Brief Description of Drawings

Other features, details and advantages will be shown in the following detailed description and on the figures, on which:
Fig. 1 is a diagram showing the steps of an exemplified method for releasing hydrogen from polysiloxane hydrogen carriers according to the invention.
Fig. 2 is a diagram showing the steps of the method of Fig. 1 following separation of the phases and regarding the gaseous phase.
Fig. 3 is a diagram showing the steps of the method of Fig. 1 following separation of the phases and regarding the solid and liquid phases.

### Description of Embodiments

### Detailed Description

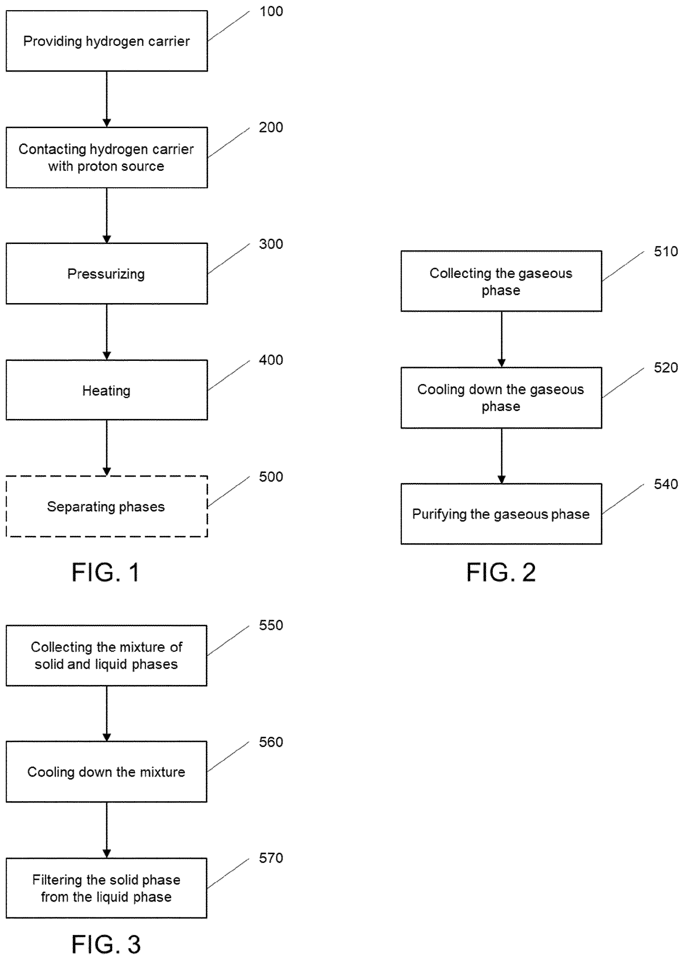

The present invention provides a method for releasing hydrogen from polysiloxane hydrogen carriers without the use of traditional catalysts, thereby reducing environmental and chemical hazards. This method involves several steps that result in the efficient production of hydrogen gas and which are described in further details with reference to figures 1 to 3.

The method comprises providing **100** a polysiloxane-type hydrogen carrier; contacting **200** a proton source with the polysiloxane hydrogen carrier thereby obtaining a polysiloxane mixture; pressurizing **300** the polysiloxane mixture at a pressure of higher than 1 bar; and heating **400** the polysiloxane mixture at a temperature of at least 100°C; thereby obtaining a gaseous phase, a solid phase and a liquid phase; wherein the gaseous phase comprises H₂.

It must be observed that although Fig. 1 shows contacting **200,** pressurizing **300** and heating **400** as a succession of actions, the method does not necessarily need these steps to be performed in the illustrated order as explained in the following description.

The method for releasing hydrogen from polysiloxane hydrogen carriers according to the invention thus operates without the need for catalysts. This is achieved through the use of specific conditions, such as pressurization and heating, which facilitate the release of hydrogen from the polysiloxane structure. Since there is no need for any catalyst, the overall process is simplified; thus, reducing the complexity of the reaction setup and minimizing the number of components required, what leads to the process being easier to manage and control.

Moreover, catalysts are usually expensive due to the cost of purchase but also due to the cost of recovering and recycling them. Thus, the present method reduces these costs making it economically more viable.

Further, catalysts, such as alkaline hydroxide, are reactive chemicals and may represent an additional hazard due to handling of the chemical, especially for the operators. By providing a catalyst-free method, fewer chemicals need to be handled and thus reducing handling hazards.

Besides, catalysts in general can have significant negative impacts on the environment. They may introduce hazardous chemicals into the process, which require careful handling and disposal. By avoiding catalysts, the method reduces the potential for environmental contamination and chemical hazards.

Further, hydrogen release methods from polysiloxane-type hydrogen carriers using a catalyst such as alkaline hydroxide yield, on one hand, a gaseous phase and, on the other hand, a liquid phase. However, the high pH of the liquid phase makes it difficult to separate the silicate from the alkaline hydroxide. By contrast, the present method yields three easily separable phases. Indeed, the solid phase can be separated from the liquid phase through filtration.

A hydrogen carrier is a substance or material that can store and transport hydrogen in a stable form, facilitating its safe handling and release when needed. Hydrogen carriers are used to overcome the challenges associated with the storage and transportation of hydrogen gas, which is highly flammable and prone to leakage due to its small molecular size. Hydrogen can be released from the carrier through various processes, such as heating, pressurization, or chemical reactions, alone or in combination, making it available for use as a clean energy source.

The hydrogen carrier used in the present invention is a polysiloxane. Polysiloxane is a type of polymer that consists of a backbone made up of alternating silicon and oxygen atoms, typically represented by the repeating unit -(Si-O)ₙ-. The silicon atoms in the backbone are often bonded to hydrogen atoms or organic groups, such as methyl, ethyl, or other alkyl or aryl groups. However, in the polysiloxane used as hydrogen carrier, the silicon atoms are preferably bonded to hydrogen atoms as these hydrogen atoms will react and form gaseous hydrogen during release.

Therefore, the polysiloxane may comprise repeating units of the formula -(SiH₂-O)ₙ, where n is an integer representing the number of repeating units, with n being 2 or more. Such compounds are advantageous compared to other polysiloxane since they can release a higher amount of hydrogen. For example, in comparison with poly(hydromethyl)siloxane, poly(bis(hydro))siloxane can release up to 2.61 more hydrogen for the same weight of polysiloxane.

Preferably, n is superior or equal to 2, 3, 4, 5 or even to a higher number. Preferably still, n is inferior or equal to 500, for example inferior or equal to 50.

The polysiloxane may be a linear compound. In a preferred embodiment, the linear polysiloxane may be a compound of formula (I):

R-O-(SiH₂-O)ₙ-R', formula (I),

where R and R' are carbon-free and independently comprise at least one of Si, H, O, and a halogen, and n is an integer representing the number of repeating units, with n being 2 or more.

The carbon-free R and R' radicals may be independently selected from -SiH₃, -SiH₂X, - SiHX₂, and -SiX₃, wherein X may be OH or a halogen such as F, Cl, Br or I, preferably Cl. Preferably still, at least one of R and R' comprises a halogen.

For example, the linear polysiloxane may be selected from H₃Si-O-(SiH₂-O)ₙ-SiH₂X, H₃Si-O-(SiH₂-O)ₙ-SiHX₂, H₃Si-O-(SiH₂-O)ₙ-SiX₃, XH₂Si-O-(SiH₂-O)ₙ-SiH₂X, XH₂Si-O-(SiH₂-O)ₙ-SiHX₂, XH₂Si-O-(SiH₂-O)ₙ-SiH₂OH, XH₂Si-O-(SiH₂-O)ₙ-SiH(OH)₂, XH₂Si-O-(SiH₂-O)ₙ-Si(OH)₃, X₂HSi-O-(SiH₂-O)ₙ-SiH₂X, X₂HSi-O-(SiH₂-O)ₙ-Si(OH)₃, X₂HSi-O-(SiH₂-O)ₙ-SiH₂OH, X₂HSi-O-(SiH₂-O)ₙ-SiH(OH)₂, X₂HSi-O-(SiH₂-O)ₙ-Si(OH)₃, X₃Si-O-(SiH₂-O)ₙ-SiH₂X, X₃Si-O-(SiH₂-O)ₙ-SiHX₂, X₃Si-O-(SiH₂-O)ₙ-SiX₃, X₃Si-O-(SiH₂-O)ₙ-SiH₂OH, X₃Si-O-(SiH₂-O)ₙ-SiH(OH)₂, and X₃Si-O-(SiH₂-O)ₙ-Si(OH)₃; wherein X is a halogen, preferably a halogen selected from F, Cl, Br and I, more preferably Cl, and n is an integer representing the number of repeating units, with n being 1 or more.

The polysiloxane-type hydrogen carrier may be a blend of linear polysiloxanes, and notably a blend of the linear polysiloxanes listed above.

The number average molecular weight (Mn) and/or the molecular weight distribution (D) of the linear polysiloxane or blend of linear polysiloxanes may range from 64 to 30 000 g/mol and from 1.1 to 50, respectively. The average molecular weight and the molecular weight distribution can be measured according to any appropriate method; for example, it can be determined according to the ISO 16014 norm.

The polysiloxane may be a cyclic compound, for example a cyclic compound of formula H₂ₙSₙOₙ and in particular a cyclic compound of the following formula (II):

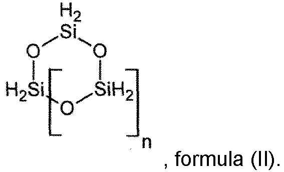

More in particular, the cyclic polysiloxane may be chosen from the group consisting of: tri(bis(hydro)cyclosiloxane), tetra(bis(hydro)cyclosiloxane), penta(bis(hydro)cyclosiloxane), hexa(bis(hydro)cyclosiloxane), hepta(bis(hydro)cyclosiloxane), octa(bis(hydro)cyclosiloxane), nona(bis(hydro)cyclosiloxane), deca(bis(hydro)cyclosiloxane), undeca(bis(hydro)cyclosiloxane), duodeca(bis(hydro)cyclosiloxane), trideca(bis(hydro)cyclosiloxane), tetradeca(bis(hydro)cyclosiloxane), pentadeca(bis(hydro)cyclosiloxane), hexadeca(bis(hydro)cyclosiloxane), heptadeca(bis(hydro)cyclosiloxane).

The polysiloxane-type hydrogen carrier may be a blend of cyclic polysiloxanes, and notably a blend of the cyclic polysiloxanes listed above.

The molecular weight of the cyclic polysiloxane or blend of cyclic polysiloxanes may range from 130 to 800 g/mol. The molecular weight can be measured according to any appropriate method; for example, it can be determined by GC-MS, e.g. a GC-MS analysis performed on an Agilent GC/MSD 5975C apparatus.

The polysiloxane-type hydrogen carrier may be a blend of one or more cyclic polysiloxanes and one or more linear polysiloxanes, and notably one or more cyclic polysiloxanes listed above and one or more linear polysiloxanes listed above.

The polysiloxane-type hydrogen carrier of formula (I) and formula (II) may have a dynamic viscosity of 0.1 to 10000 mPa·s at a temperature of 20°C and a pressure of 1 atm (1.01325×10⁵ Pa). The polysiloxane-type hydrogen carrier of formula (I) and of formula (II) may preferably have a dynamic viscosity of 0.2 to 50 mPa·s at a temperature of 20°C and a pressure of 1 atm. The dynamic viscosity at a temperature of 20°C and a pressure of 1 atm is measured according to any appropriate method; for example, it can be determined according to the ISO 1628-1 norm.

The proton source may be water, which can be selected from various types such as deionized water, tap water, lake water, river water, sea water, rain water. Indeed, the method according to the invention is designed to be robust and versatile, allowing it to function effectively with various types of water, regardless of their purity levels. By not requiring purified water, the method is more environmentally friendly and cost-effective. It allows for the use of readily available water sources, reducing the need for additional purification steps and associated costs.

The water/[SiOH₂] unit molar ratio is preferably superior or equal to 0.1. For example, the water/[SiOH2] unit molar ratio which may be comprised between 2 and 10, for example between 2 and 2.5.

Contacting **200** may be performed by simply injecting the reagents (hydrogen carrier and proton source) into a container (reactor), preferably through a check valve. Injecting the reagents (hydrogen carrier and proton source) involves pressurizing the reagents at a pressure above the desired pressure inside the reactor (see below). Contacting **200** may further comprise before injecting the reagents, providing a water bed in the container.

Pressurizing **300** may be performed until a pressure of 1 to 1000 bars inside the reactor is reached, preferably 20 to 100 bars, and still more preferably 30 to 60 bars. Pressurizing **300** may comprise heating water through for example the reactor at the desired reaction temperature, thus initiating increase of pressure. In some cases, heating the water is not sufficient, thus pressurizing **300** may further comprise injecting a gas such as hydrogen, inert gas, etc. into the reactor.

Pressurizing **300,** at an initiation stage of the method, may be performed through injection of pressurized dihydrogen into the reactor until the desired pressure is reached and before the proton source is added. Once the reaction between the proton source and the hydrogen carrier is initiated, the generated dihydrogen naturally pressurizes the reactor.

Heating **400** may be performed through any type of heat source such as electric arc technology, induction heating, microwave, hot filament, plasma technology. However, the preferred heat source is a heating element and/or a heat exchanger which collects heat from the reaction to cycle it back to the reaction mixture, for example to heat the water to be introduced into the reaction mixture.

Heating **400** may be performed through heating the proton source before it is contacted with the hydrogen carrier. Indeed, in most cases, it is not necessary to heat the reaction mixture directly since the reaction between the proton source and the hydrogen carrier is exothermic, but heating **400** is only needed to ease initiating the reaction. In such case, heating **400** the proton source provides the necessary energy to initiate the reaction and the heat generated during the reaction between the proton source and the hydrogen carrier is preferably at least partially recycled back to heat the proton source before contacting **200.** Any excess heat generated that is not recycled back to heat the proton source may be valorized.

When contacting **200** is performed through injecting the reagents, pressurizing the proton source is preferably performed before heating the proton source, which is heated without overstepping the hydrostatic pressure.

Heating **400** may be conducted at a temperature range of 100 to 400°C, preferably 150 to 300°C, and still more preferably 160 to 280°C.

The high temperature and pressure help ensure that the reaction proceeds as intended.

The method may further comprise separating **500** the three phases. The gaseous phase may be collected **510** to separate it from the solid and liquid phases. This separation can be achieved through various means, such as phase separation techniques or filtration.

Once the gaseous phase is collected, it may be further processed by cooling **520** and purifying **530** the hydrogen gas. Cooling **520** helps in condensing any residual moisture or impurities (primarily water), while purifying **530** removes non condensable compounds such as pollutants (e.g. HCI, residual H₂O, carbon, etc.); thus, ensuring that the hydrogen gas meets the desired purity standards for its intended use and in particular a hydrogen of grade D according to standard ISO 14687:2019.

The method may also include collecting **550** the mixture of solid and liquid phases, followed by cooling **560** and filtering **570** to separate the solid phase from the liquid phase. These steps ensure that any by-products or residual materials are efficiently managed and disposed of or recycled as needed.

Overall the method is exothermal, even though heating is necessary to initiate and/or accelerate the reaction.

Overall, this method provides a safer and more environmentally friendly approach to hydrogen production from polysiloxane hydrogen carriers, eliminating the need for hazardous catalysts and reducing the potential for chemical hazards.

## Claims

1. Catalyst-free hydrogen releasing method comprising:
providing (100) a polysiloxane hydrogen carrier;
contacting (200) a proton source with the polysiloxane hydrogen carrier thereby obtaining a polysiloxane mixture;
pressurizing (300) the polysiloxane mixture at a pressure of higher than 1 bar; and
heating (400) the polysiloxane mixture at a temperature of at least 100°C;
thereby obtaining a gaseous phase, a solid phase and a liquid phase; wherein the gaseous phase comprises H₂.

2. The method of claim 1, wherein the polysiloxane comprises:
-(SiH₂-O)ₙ-
wherein n is an integer representing the number of repeating units, with n being 2 or more.

3. The method of claim 2, wherein the polysiloxane is a compound of formula (I):
R-O-(SiH₂-O)ₙ-R',
wherein R and R' are carbon-free and independently comprise at least one of Si, H, O and a halogen.

4. The method of any one of claims 1 to 3, wherein the proton source is water.

5. The method of claim 4, wherein the water is chosen from deionized water, tap water, lake water, river water, and sea water.

6. The method of any one of claims 1 to 5, wherein contacting comprises injecting the hydrogen carrier and the proton source under pressure.

7. The method of any one of claims 1 to 6, wherein pressurizing is performed until a pressure of 1 to 1000 bars is reached, preferably 20 to 100 bars, still preferably 30 to 60 bars.

8. The method of any one of claims 1 to 6, wherein heating is performed at a temperature of 100 to 400°C, preferably 150 to 300°C, still preferably 160 to 280°C.

9. The method of claim 8, wherein heating comprises heating the proton source.

10. The method of claim 9, wherein heat generated by the reaction between the proton source and the hydrogen carrier is at least partially recycled back to heat the proton source.

11. The method of any one of claims 1 to 10, further comprising separating (500) the three phases.

12. The method of claim 11, wherein separating the three phases comprises collecting (510) the gaseous phase to separate it from the solid and liquid phases.

13. The method of claim 12, further comprising cooling down (520) the collected gaseous phase and purifying (530) the cooled gaseous phase.

14. The method of claim 12 or claim 13, further comprising collecting (550) a mixture of solid and liquid phases, cooling (560) down the mixture, filtering (570) the solid phase from the liquid phase.
